# EUROPEAN PATENT APPLICATION

(11) **EP 2 450 665 A1**
(43) Date of publication of application: **09.05.2012**
(21) Application number: 12153417.6
(22) Date of filing: 08.03.2007
(51) Int. Cl.: G01C 21/00, G08G 1/0969, G09B 29/00, G09B 29/10, G01C 21/34

(54) **Travel route search device, method thereof, program thereof, recording medium containing the program and guide device**

(30) Priority: 10.03.2006 JP 2006066538
(62) Divisional of application: 07738000.4
(71) Applicant: Pioneer Corporation, Meguro-ku, Tokyo (JP); Increment P Corporation, Tokyo (JP)
(72) Inventor: Amano, Kouji, Meguro-ku, Tokyo 1538665 (JP)
(74) Representative: Haley, Stephen

(57) **Abstract**

When a user specifies a predetermined road on which the user hopes to travel with a terminal console (130), a condition recognizer (173) acquires a specific road information relating to the specified road and retrieves other links having the same characteristics based on attribution information of the specific road information to recognize a link string that constitutes a road line. The route processor (176) searches for a start-point-side route and a destination-side route having the shortest distance from a current position and a destination to a passage road to retrieve a travel route including a road on which the user hopes to travel.

## Description

### Technical Field

The present invention relates to a travel route searching device that navigates a travel of a vehicle from a start point to a destination based on map information, method thereof, program thereof, recording media storing the program and a guiding device.

### Background Art

Traditionally, an in-vehicle navigation device that searches for a travel route to a destination to navigate a vehicle has been known as a guiding device for navigating the travel of the vehicle after searching for the travel route of the vehicle. The navigation device that searches for the travel route employs an arrangement to retrieve a substitute route, in which, for instance, a route is searched to include or not to include an expressway within a travel route based on an input operation of a user to determine the necessity for using an expressway, or a route to detour a predetermined section that is congested, or the like is searched (see, for instance, Patent Documents 1 to 4).
In the apparatus disclosed in the Patent Document 1, once a command for circumventing the section connecting predetermined points has been received through an operation button, an appropriate route to a destination is re-searched with reference to a map database.
In the apparatus disclosed in Patent Document 2, when a user identifies a predetermined point on a route connecting a start point and a destination, a circumventing section is set from the vehicle location to the predetermined point (return point). Then, a plurality of circumventing routes for detouring the circumventing section is searched and, when one of the plurality of circumventing routes is selected, a new navigation route including the selected circumventing route is established, based on which navigation is conducted.
In the apparatus disclosed in Patent Document 3, a substitute route from a new start point on an original route to a subsequent point on the original route is determined. The section to be circumvented by the substitute route is determined and the section of the original route starts from the new start point. The section of the original route is divided into a plurality of classification having related original parameters. The selected original parameters are adjusted to generate a plurality of adjusted parameters and a substitute route from the new start point to the subsequent point is determined partially based thereon.
In the apparatus disclosed in Patent Document 4. a series of data showing a traffic event item and passage operation item encountered by a user while driving along a calculated route is displayed and the type of items to be circumvented in a new route to a destination is selected by the user. A new route is re-calculated in accordance with the selection of the user to navigate the user to a destination on a new route.

| | |
|---|---|
| Patent Document 1 | WO01/94886 |
| Patent Document 2 | JP-2002-243480 A |
| Patent Document 3 | JP-10-221100A |
| Patent Document 4 | JP-2005-140776 A |

### Disclosure of the Invention

### Problems to Be Solved by the Invention

Incidentally, when a travel route is searched on the basis of shortest distance or shortest time to a destination, the searched route may not be preferably used since a user has already known that the road width is relatively narrow or the road is likely to be congested in a period during which the user travels on the road. In this instance, the user often hope to move on another road that is known to be relatively near the travel route or located before the destination which is frequently used. easy to turn or wide enough for easily driving in spite of more or less detouring. When an express way is used to establish a travel route, the travel route is set to enter the express way from an interchange located near the destination. However, in some instance, a distance to another interchange to the express way that is located in a direction opposite to the destination is considerably shorter than the designated interchange in the established travel route. In such cases, the user may hope to increase the ratio of the express way that is easy to move on irrespective of higher express way tolls or relatively longer travel distance.
In order to search for a travel route that meets the preference of each user according to conventional navigation device disclosed in the above-described Patent Documents 1-4, complicated and troublesome input operation and considerable time are required before searching the travel route on which the user hopes to travel.

An object of the present invention is to provide a travel route searching apparatus that searches for a travel route that meets the preference of a user, method thereof, program thereof, recording media storing the program and a guiding device.

### Means for Solving the Problems

A travel route searching device according to an aspect of the invention retrieves a travel route for guiding a travel of a vehicle from a start point to a destination based on map information, the device including: a map information acquirer that acquires the map information including a plurality of point information assigned with unique point information to represent a predetermined point, segment information assigned with unique segment information and connecting a pair of the point information and road characteristics information on characteristics of a road represented by the point information and the segment information; a start-point information acquirer that acquires start-point information on the start point; a destination information acquirer that acquires destination information on the destination; a condition recognizer that acquires specific road information on a specified road; and a travel route searching unit that searches for a start-point-side route from the start point to the specified road and a destination-side route from the destination to the specified road based on the map information, the specific road information, the start-point information and the destination information and searches for a travel route from the start point to the destination including the specified road.

A travel route searching method according to another aspect of the invention retrieves a travel route for guiding a travel of a vehicle from a start point to a destination based on map information, the method being implemented by a computing unit, the method including: a map information acquiring step for acquiring the map information including a plurality of point information assigned with unique point information to represent a predetermined point, segment information assigned with unique segment information and connecting a pair of the point information and road characteristics information related to characteristics of a road represented by the point information and the segment information; a start-point information acquiring step for acquiring start-point information related to the start point; a destination information acquiring step for acquiring destination information related to the destination; a condition recognizing step for acquiring specific road information on a specified road; and travel route searching step for searching for a start-point-side route from the start point to the specified road and a destination-side route from the destination to the specified road based on the acquired map information, the specific road information, the start-point information and the destination information and searches for a travel route from the start point to the destination including the specified road.

A travel route searching program according to still another aspect of the invention controls a computer to function as the above-described travel route searching device.

A travel guiding program according to further aspect of the invention operates a computer to execute the above-described aspect of the travel route searching method.

A recording medium according to still further aspect of the invention stores the above-described travel route searching program in a manner readable by a computer.

A navigation device according to still further aspect of the invention includes: the travel route searching device according the above aspect of the invention; a detector that detects a travel condition of the vehicle; and a notifying unit that notifies the travel condition of the vehicle based on the travel route retrieved by the travel route searching device; and the travel condition detected by the detector.

### Brief Description of Drawings

Fig. 1 is a block diagram briefly showing a navigation device of an embodiment of the present invention.
Fig. 2 is a conceptual diagram schematically showing a table structure for display data of map information of the embodiment.
Fig. 3 is a conceptual diagram schematically showing a table structure for matching data of map information of the embodiment.
Fig. 4 is a conceptual diagram schematically showing a table structure of a link of link string block information of the embodiment.
Fig. 5 is a conceptual diagram schematically showing a table structure of a node of link string block information of the embodiment.
Fig. 6 is a schematic illustration showing map displayed on a screen for explaining a situation in which a user specifies a predetermined road that is hoped to move on in the embodiment.
Fig. 7 is a schematic illustration showing a map displayed on a screen for explaining a situation in which a user specifies a predetermined road that is not hoped to move on in the embodiment.
Fig. 8 is a flow chart that shows an operation for establishing a driving-support travel route in the navigation device of the embodiment.
Fig. 9 is a schematic illustration showing a map screen when a plurality of candidate travel routes are searched in the embodiment.
Fig. 10 is a schematic illustration showing a map screen when an established travel route is displayed on a screen in a superposing manner in the embodiment.
Fig. 11 is a flow chart that shows a re-search operation for designating a passage road in the navigation device of the embodiment.
Fig. 12 is a schematic illustration showing a map screen when a travel route established by re-searching is displayed on a screen in a superposing manner in the embodiment.
Fig. 13 is a flow chart that shows a re-search operation for designating a circumvention road in the navigation device of the embodiment.
Fig. 14 is a schematic illustration showing a map screen when the travel route established by re-searching is displayed on the screen in a superposing manner in the embodiment.
Fig. 15 is a schematic illustration showing a display screen for designating a circumvention road in a navigation device according to another embodiment of the invention.
Fig. 16 is a flow chart showing a calculating condition for searching for a travel route according to still another embodiment of the invention.
Fig. 17 is a flow chart showing an operation for searching for a travel route according to further embodiment of the invention.

### Explanation of Codes

100......guiding device in the form of a navigation device
110 ...... detector in the form of sensor unit
130 ...... terminal console
140......terminal display (notifying unit in the form of display device)
150......notifying unit in the form of terminal sound unit
170...... terminal computing unit (computing unit in the form of travel route searching device)
171 ......start point information acquirer in the form of current position recognizer
172......destination information acquirer in the form of destination recognizer
173......condition recognizer
175.....display controller
176.......travel route searching unit that also functions as map information acquirer in the form of route processor.

### Best Mode for Carrying Out the Invention

An embodiment will be described with reference to the attached drawings. In the embodiment, a navigation device as a guiding device including a travel route searching apparatus of the invention will be described below for explanation sake. Incidentally, the vehicle of the invention is not limited to a passenger automobile, commercial vehicle and the like, but includes any vehicle such as a motorcycle that runs on a road.

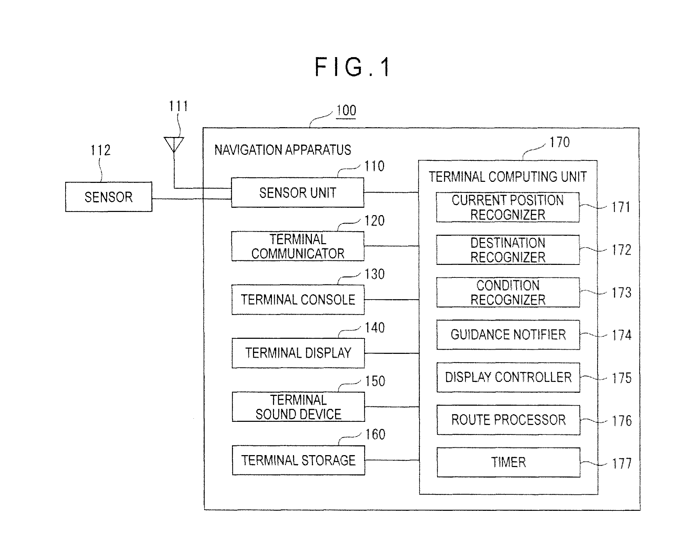

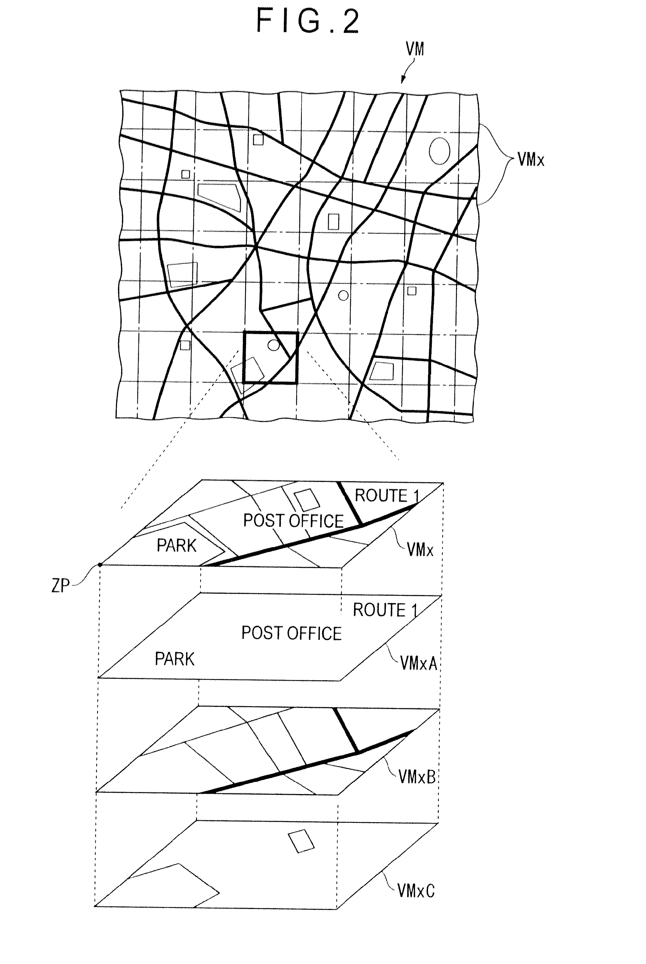

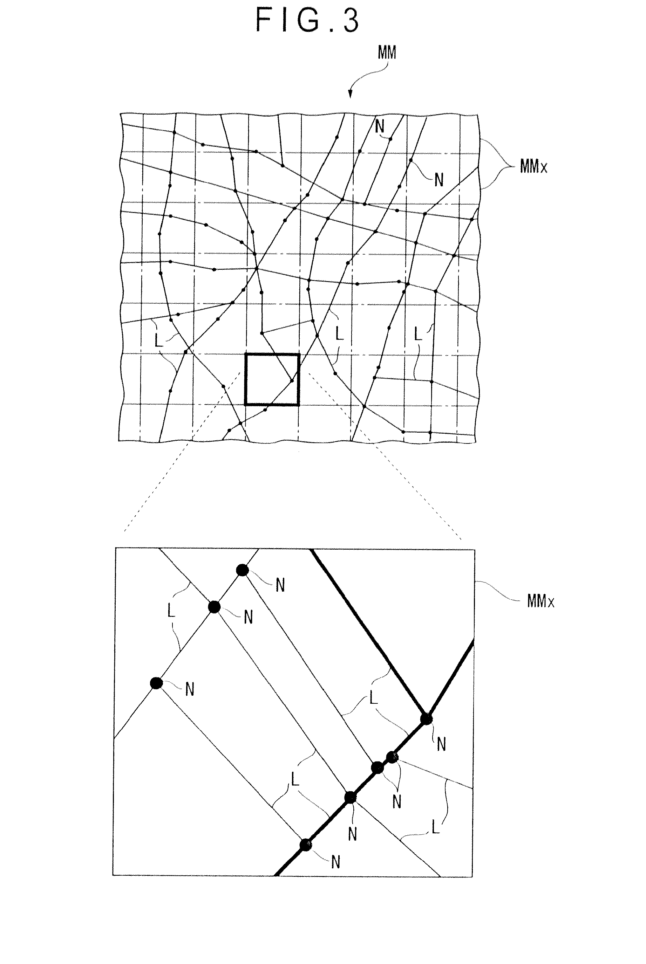

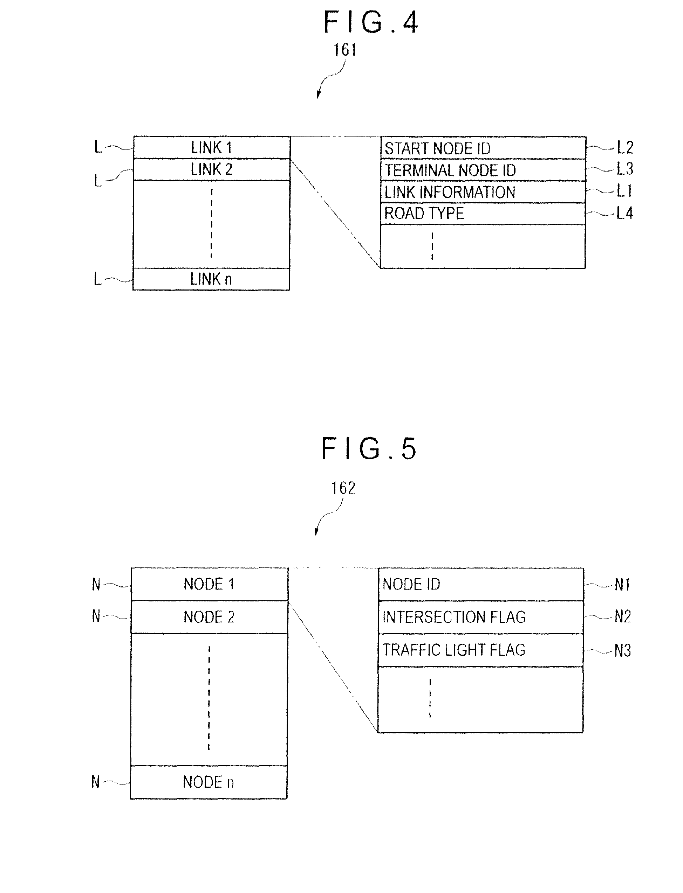

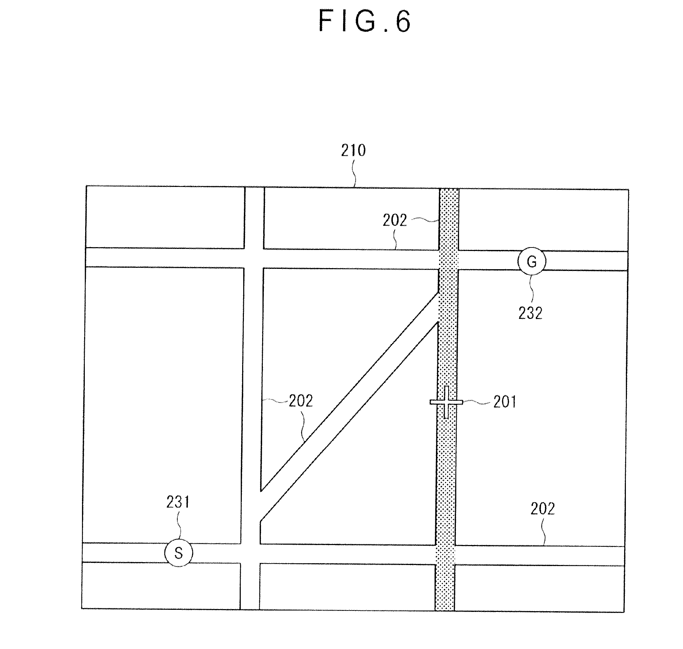

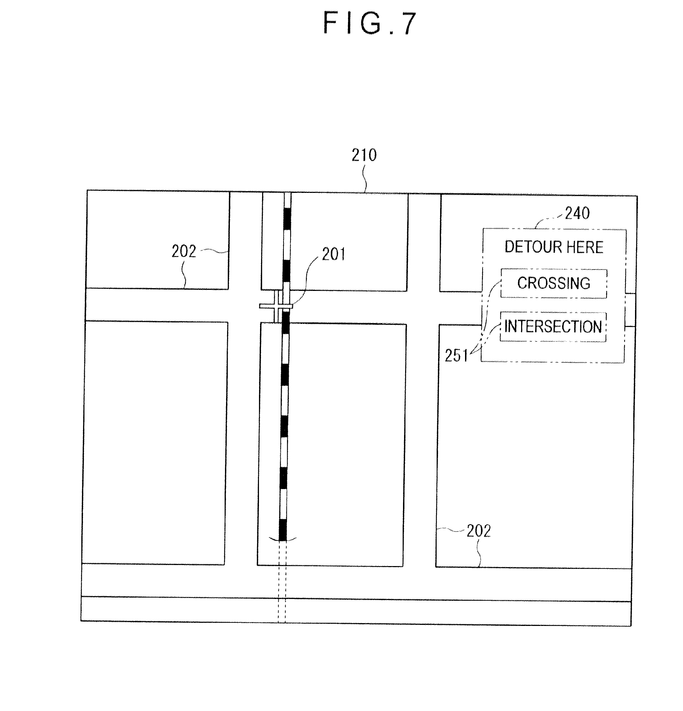

Fig. 1 is a block diagram showing the brief configuration of the navigation device in the present embodiment. Fig. 2 is a conceptual diagram schematically showing a table structure for display data of map information. Fig. 3 is a conceptual diagram schematically showing a table structure for matching data of the map information. Fig. 4 is a conceptual diagram showing a table structure of link string block information in a segment information database of map information. Fig. 5 is a conceptual diagram showing a table structure of link string block information in a point information database of map information. Fig. 6 is a schematic illustration showing map displayed on a screen for explaining a situation in which a user specifies a predetermined road that is hoped to move on. Fig. 7 is a schematic illustration showing map displayed on a screen for explaining a situation in which a user specifies a predetermined road that is not hoped to move on.

### [Configuration of Navigation Device]

Referring to Fig. 1, the reference numeral 100 denotes the navigation device (guiding device). The navigation device 100 notifies guidance on a travel along with a traveling condition of a vehicle (e.g. a passenger automobile). Incidentally, the vehicle is not limited to a passenger automobile but includes any vehicle such as commercial vehicle. a motorcycle and the like that runs on a road. The navigation device 100 is not limited to, for example, an in-vehicle unit installed in a vehicle, but includes a portable unit, a PDA (Personal Digital Assistant), a mobile phone, a PHS (Personal Handyphone System), a portable personal computer and the like.
As shown in Fig. 1, the navigation device includes: a sensor unit 110; a terminal communicator 120; an operating unit in the form of terminal console 130; a display device in the form of terminal display 140; a terminal sound device 150; a terminal storage 160; a terminal computing unit 170 (a travel route searching unit as a computing unit).

The sensor unit 110 detects moving condition of a mobile body (e.g. a vehicle), i.e. the current position and running condition, to output a predetermined detection signal to the terminal computing unit 170. The sensor unit 110 includes a GPS (Global Positioning System) receiver (not shown) and various sensors 112 such as a speed sensor, an azimuth sensor and an acceleration sensor (not shown).
The GPS receiver receives electric navigation waves output from a GPS satellite (not shown), which is an artificial satellite, with a GPS antenna 111. Then, the GPS receiver calculates simulated coordinate values of the current position on the basis of a signal corresponding to the received electric navigation waves and outputs the calculated coordinate values as a GPS data to the terminal computing unit 170.
The speed sensor of the sensor 112 in the sensor unit 110 is disposed on a vehicle and the like so as to detect the driving speed and the actual acceleration of the vehicle on the basis of a signal that varies depending on the driving speed (traveling speed) of the vehicle. The speed sensor reads a pulse signal, a voltage value and the like output in response to the revolution of the axles and the wheels of the vehicle. The speed sensor outputs a detection signal such as read pulse signal, voltage value and the like. The azimuth sensor in the sensors 112 is arranged on the vehicle and provided with a so-called gyro-sensor (not shown) so as to detect the azimuth of the vehicle, i.e., the driving direction to which the vehicle is heading to output a detection signal indicating a running direction. The acceleration sensor in the sensors 112 is disposed on a vehicle, the acceleration sensor detecting an acceleration in the running direction of the vehicle to output the detected acceleration after converting into a sensor output value in the form of pulse or voltage detection signal. The sensors 112 may not be limited to the above, but may be constructed of only one of the speed sensor, the azimuth sensor and the acceleration sensor, may be combined differently, or may include additional sensor as long as moving condition of the vehicle can be detected. The sensors 112 may be installed in the navigation device 100.

The terminal communicator 120 performs a preset input interface process in response to a signal inputted via a network (not shown) and outputs a processing signal to the terminal computing unit 170. Further, when the processing signal to be transmitted to a destination such as a server unit (not shown) is inputted from the terminal computing unit 170, the terminal communicator 120 performs a predetermined output interface processing on the inputted processing signal to output the processing signal to the destination such as the server unit.
Further, the terminal communicator 120 includes, for instance, a VICS antenna (not shown) for acquiring traffic information such as traffic accident and traffic congestion from a road traffic information distributing system such as that administered by Vehicle Information and Communication System (VICS: Registered trademark) Center in Japan. Specifically, the terminal communicator 120 acquires VICS data such as traffic congestion, traffic accident, construction work and traffic regulation from the VICS though a beacon and a network such as FM multiple broadcasting. The acquired VICS data is then outputted to the terminal computing unit 170 as a predetermined signal.
Further, the terminal communicator 120 receives map information traffic information and the like distributed from a server unit, which is outputted to a terminal storage 160 to be stored therein. Incidentally, if the map information, the traffic information and the like are identified to have been acquired based on version information and setting time information thereof, no storing processing is necessary.
The network may be the Internet an intranet and a LAN (local Area Network) based on a general-purpose protocol such as TCP(Transmission Control Protocol)/IP (Internet Protocol) protocol, a communication network and a broadcasting network that have a plurality of base stations capable of communicating by way of a radio medium, or the radio medium itself that enables direct communication between the navigation device 100 and the VICS. The radio medium may be any one of electric waves, light beams, acoustic waves and electromagnetic waves.

The input section 130, which may be a keyboard, a mouse or the like, has various operation buttons and operation knobs (not shown) to be used for input operations. The operation buttons and the operation knobs are used to input, for example, the setting items for setting the operation contents of the navigation device 100. More specifically, they may be used: to set the type of information to be acquired and acquiring condition; to set a destination; to retrieve information; to display the driving status (running condition) of the vehicle; to issue an instruction for executing a communication operation as a communication request information for acquiring information over the network; and to set the contents and condition of the information to be acquired. Based on the input operation for the settings, the terminal console 130 outputs a predetermined operation signal to the terminal computing unit 170 so as to apply the settings.
In place of the operation buttons and the operation knobs, the terminal input section 130 may include any types of input unit such as a touch panel that may be arranged on the terminal display 140, a sound input section for the input operations thereof, a configuration where a signal is received via a radio medium in response to an operation on a remote controller as long as various setting items can be input.

The terminal display 140 is controlled by the terminal computing unit 170 and displays image data based on the signal from the terminal computing unit 170. The image data includes image data of map information and retrieved information, TV image data received by a TV receiver (not shown), image data stored in an external device or a recording medium such as an optical disc, a magnetic disc or a memory card and read by a drive or a driver, and image data from the terminal storage 160.
Various display devices may be used for the terminal display 140 such as a liquid-crystal display panel, an organic EL (Electro Luminescence) panel, a PDP (Plasma Display Panel), a CRT (Cathode-Ray Tube), an FED (Field Emission Display), or an electrophoretic display.

The terminal sound device 150 is provided with a sound generator such as a speaker (not shown). The terminal sound device 150 is controlled by the terminal computing unit 170 and outputs a signal of, for example, sound data from the terminal computing unit 170 via the sound generator. Information outputted as sounds, which may be the driving direction, the driving status, the traffic condition and the like of the vehicle, are notified to the driver and the like for guiding the drive of the vehicle.
The sound generator may output TV audio data received by the TV receiver or sound data stored in a recording medium or the terminal storage 160. The terminal sound device 150 may not be provided with the above-described sound generator but may use a sound generator equipped in the vehicle.

The terminal storage 160 readably stores the map information shown in Figs. 2 to 5, various information acquired through the network, setting item inputted by the terminal console 130, various contents such as music and video and the like in a manner that the terminal computing unit 170 can read out. The terminal storage 160 also stores various programs that run on an OS (Operating System) controlling the whole operation of the navigation device 100.
The terminal storage 160 may be provided with a drive device and a driver that stores information on various recording medium including magnetic disc such as an HD (Hard Disk), optical disc such as DVD (Digital Versatile Disc), memory card and the like. The drive device and the driver may be provided in plural.

The map information includes display data VM which is a so-called POI (Point Of Interest) data, a matching data MM, for example, shown in Fig. 3, travel route searching map data, segment information database of, for instance, a table structure shown in Fig. 4, point information database of, for instance, a table structure shown in Fig. 5 and the like.
The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area. Each display mesh information VMx has a rectangular shape with each side thereof having a predetermined length, which is reduced relative to the actual geographic length according to the map scale. A predetermined corner thereof contains absolute coordinates ZP in the whole map information, e.g., a global map.
The display mesh information VMx is, for instance, constituted from name information VMxA such as intersection names, road information VMxB and background information VMxC. The name information VMxA is data structured in a table for arranging and displaying miscellaneous element data (e.g. intersection name, town name) contained in an area at a predetermined position with reference to the positional relationship based on the absolute coordinates ZP. The road information VMxB is data structured in a table for arranging and displaying road element data (e.g. road) contained in an area at a predetermined position with reference to the positional relationship based on the absolute coordinates ZP. The background information VMxC is data structured in a table for arranging and displaying miscellaneous element data (e.g. mark and image information representing famous spots and buildings) at a predetermined position with reference to the positional relationship based on the absolute coordinates ZP.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. Each matching mesh information MMx has a rectangular shape with each side thereof having a predetermined length, which is reduced relative to the actual geographic length according to the map scale. A predetermined corner thereof contains absolute coordinates ZP in the whole map information, e.g., a global map. The matching mesh information MMx and the display mesh information VMx may not necessarily represent the same area. That is, they may be divided according to different scales. If the same scale is used, unique number information may be used for associating the data. If a different scale is used, the absolute coordinates may be used for associating the data.
The matching data MM is used in a map matching process for correcting a display error such as displaying a vehicle mark not on a road but on a building in superposing a traveling status of the vehicle on the map information such that the vehicle mark is positioned on the road. The matching data MM has a plurality of link string block information.

As shown in Fig. 3, the link string block information is structured in a table in which a plurality of links L is associated according to a predetermined rule. The link L (segment information) connects nodes N (point information) to represent a road, each node N representing a point. Specifically, the links L are associated to form a continuous broken link string representing a certain length such as a road like Kosyu street and Ome street.
As shown in Fig. 4, the links L includes: segment-specific information in the form of link information (Link ID) L1 that is unique number assigned to each of the links L; node information such as unique number representing two nodes N connected by the links L (start point node ID L2 and end point node ID L3); and an attribute information L4 representing road characteristics such as width of tunnel and road and road type including crossing and elevated road; and the like. Each link L is associated with a VICS link, so that the positional relationship between the VICS data and the displayed map corresponds with each other. A plurality of the links L showing the segment information are recorded to construct the segment information database 161 having the structure shown in Fig. 4.
Each node N represents a joint point such as an intersection, a corner, a fork, a junction or the like of each road. As shown in Fig. 5, information on the node N includes: point-specific information (node ID) that is the unique number assigned to each node N in the link string block information; coordinate information on the position of the node N (not shown); intersection flag information N2 on whether or not the node N is a fork position on which a plurality of links intersects such as an intersection and a fork; traffic light flag information N3 on the presence of a traffic light and the like. A plurality of the nodes N showing the point information are recorded to construct the point information database 162 having the structure shown in Fig. 5. Some nodes N may only have the unique point information and the coordinate information without the flag information for simply representing the shape of a road, while some nodes N may additionally have attribute information representing the road characteristics structure such as width of a tunnel or a road. The nodes N without the flag information for simply representing the road shapes are not used to determine whether or not the points are identical.
The link string block information of the matching data MM is further associated with information relating to characteristics of the road, e.g. the number of lane, whether it is main line or not, road type including national road, prefectural road and toll road and arrangement in a tunnel. The information on the characteristics of the road allows map displaying corresponding to the display data VM.
The route search map information is structured in a table, which is similar to that of the matching data MM, including the point information for representing points such as the nodes N representing roads, and the segment information for connecting points such as the links L. The information is so structured to represent roads for searching for the travel route.

The terminal storage 160, for instance, stores the retrieval information for acquiring information of a predetermined point in the map information.
More specifically, the retrieval information includes various information about contents and guidance such as names of states, cities, regions and points, which are units used to gradually divide the map information into smaller areas, as well as various information about shops as points. The retrieval information is structured in a tree structure table so that item information is hierarchically associated with each other.
Further, the terminal storage 160 stores congestion predicting database for forecasting traffic congestion.
The congestion forecasting database represents statistical traffic information provided by statistically processing past traffic condition with temporal factor to indicate the past traffic condition at a predetermined location, which is used for route searching (i.e. travel route searching) and forecasting of congesting condition when a map is displayed. The congestion forecasting database is provided as a table structure storing: date classification ID (Identification) showing a classification of the date and day of the week; and time-series data representing congestion condition tendency obtained by statistically processing VICS data acquired from VICS and the like per each of VICS links, which is statistically processed for ten-minutes interval according to the date classification representing the temporal factor for each of the VICS links, the date classification ID and the time-series data being paired and recorded in plural.

The terminal processor 170 includes, for instance, a CPU (Central Processing Unit) and various input/output ports (not shown) including: a GPS receiving port to which the GPS receiver of the sensor unit 110 is connected; sensor ports to which the sensors 112 of the sensor unit 110 are respectively connected; a communication port connected to the terminal communicator 120; a sound control port connected to the terminal sound device 150; and a storage port connected to the terminal storage 160. The processor 170 also has various programs of: a start point information acquirer in the form of a current position recognizer 171; a destination information acquirer in the form of a destination recognizer 172; a condition recognizer 173; a guidance notifier 174; a display controller 175; a travel route searching unit also functioning as a re-search controller in the form of a route processor 176; a timer 177, and the like.

The current position recognizer 171 recognizes the current position to be set as the start point of the vehicle. More specifically, it calculates a plurality of current simulated positions of the vehicle on the basis of the speed data and the azimuth data of the vehicle outputted respectively from the speed sensor and the azimuth sensor of the sensor unit 110. The current position recognizer 171 further recognizes the current simulated coordinates values of the vehicle on the basis of the GPS data about the current position outputted from the GPS receiver. The current position recognizer 171 compares the calculated current simulated positions with the recognized current simulated coordinate values, calculates the current position of the vehicle on the map information separately acquired and recognizes the current position, thereby acquiring the current position information to be the start point information associated with the current position.
The current position recognizer 171 determines a slope angle and an altitude of a drive road on the basis of the acceleration data outputted from the acceleration sensor and calculates the current simulated position of the vehicle so as to recognize the current position. Thus, the current position of the vehicle can be accurately recognized even if the vehicle is on an intersection with an overpass or on an elevated highway where roads are overlaid in a two-dimensional view. Furthermore, when the vehicle runs on a mountain road or a slope, the current position recognizer 171 corrects the difference between the travel distance obtained only on the basis of the speed data and the azimuth data and the actual driving distance of the vehicle with the use of the detected slope angle of the road to accurately recognize the current position.
The current position recognizer 171 recognizes as the current simulated position not only the above-described current position of the vehicle but also a start point that is an initial point set with the terminal console 130. The information acquired by the current position recognizer 171 is appropriately stored in the terminal storage 160.

The destination recognizer 172, for instance, acquires the destination information about the destination set by the input operation at the terminal console 130 and recognizes the position of the destination.
The destination information to be set includes various information for identifying a location, which might be coordinates such as latitude and longitude, addresses, telephone numbers and the like. Such destination information recognized by the destination recognizer 172 is appropriately stored in the terminal storage 160.

The condition recognizer 173 acquires specific road information on the predetermined road specified by the input operation on the terminal console 130, i.e. a passage road on which the user hopes to move. Specifically, as shown in Fig. 6, various input operations is possible where, for instance, a predetermined road 202 on a map screen 210 displayed on the terminal display 140 is selected using a cursor 201 with a terminal console 130, the predetermined road 202 on the map screen 210 displayed on the screen is selected using a touch panel of the terminal display 140 (touch input operation) or road name is inputted as a text on the terminal console 130. Incidentally, Fig. 6 shows the map screen 210 used in the operation for designating the passage road in order to set the travel route from the current position (start point) S to a destination G, where an icon 231 indicating the current position and an icon 232 indicating the destination are superimposed and the passage road has been specified for the convenience of explanation.
The condition recognizer 173 searches for the specified passage road based on an operation signal for specifying the inputted passage road and acquires the link string block information directed to the road information relating to the specified passage road as the specific road information. The acquired specific road information is appropriately stored in the terminal storage 160.
The condition recognizer 173 acquires specific circumvention road information on a circumvention road specified by the input operation on the terminal console 130, i.e. a passage road on which the user does not hope to move such as an intersection, a crossing and congesting point. Specifically, as shown in Fig. 7, various input operations are possible where, for instance, a predetermined road 202 on a map screen 210 displayed on the terminal display 140 is selected using a cursor 201 with a terminal console 130, the predetermined road 202 on the map screen 210 displayed on the screen is selected using a touch panel of the terminal display 140 (touch input operation) or road name is inputted as a text on the terminal console 130. Incidentally, though a popup area 240 is illustrated in Fig. 7 for the convenience of explanation, the popup area 240 may not be displayed.
The condition recognizer 173 searches for the specified circumvention road based on an operation signal for specifying the inputted circumvention road and acquires the link string block information directed to the road information relating to the specified circumvention road as the specified circumvention road information. The acquired specified circumvention road information is appropriately stored in the terminal storage 160.

The guidance notifier 174 provides guidance stored in the terminal storage 160 on the basis of travel route information and feature guidance information acquired in advance according to the map information and driving status of the vehicle. The guidance is related to the travel of the vehicle, for instance, the contents for assisting the drive of the vehicle. The guidance notifier notifies the generated guidance as an image displayed on the terminal display 140 and a sound output by the terminal sound device 150.
For example, a predetermined arrow or a symbol may be displayed on a display screen of the terminal display 140, or sound guidance may be provided from the terminal sound device 150 like "Turn right in 700 meters ahead at intersection ○○ toward ΔΔ", "Turned off the travel route", "Traffic congestion ahead" and the like.

The display controller 175 appropriately controls the terminal display 140 to display information on the terminal display 140.
The display controller 175 superimposes the current position, the icon representing the destination, the travel route and the icon indicating traffic congestion on the map information to be displayed on the terminal display 140.
The display controller 175 displays the road on which the user hopes to move as specified by the user with the condition recognizer 173 in a display format different from the display format before being selected and also different from that of the other road as shown in Fig. 6. The specified display format includes various displaying modes such as flickering, high-luminance, different color and the like that allows easy recognition of the road specified by the user.
Additionally, the display controller 175 displays various screens for prompting a user to operate the terminal console 130 so as to set various information.

The route processor 176 searches for a travel route by calculating the travel route of the vehicle on the basis of the setting information that is set by a user for setting the route as well as the map information stored in the terminal storage 160. The route processor 176 searches (i.e. calculates) the travel route considering the setting item information inputted by the input operation of the user on the basis of request for searching various routes such as the necessity for considering the VICS data indicating the traffic information on traffic regulation, congestion and predicted congestion, shortest distance or time.
The setting item information for setting the route is acquired by, for instance, displaying a screen for urging input operation of various conditions on the terminal display 140 by the display controller 175 on the basis of operation signal in accordance with the input operation for setting request of the travel route and by conducting an input operation thereon in accordance with the screen display. The established travel route is outputted to the terminal storage 160 to be stored.
More specifically, if the setting information does not contain the traffic congestion prediction request information, the current position, the destination, the setting item information and the current traffic congestion information are acquired in order to retrieve the travel route. Then, based on the acquired information, the travel route processor 176 searches for available roads, where, for example, traffic is allowed, using the route search map information of the map information, and generates travel route information for setting a route with a shorter required time, a route with a shorter travel distance, or a route without traffic congestion and traffic regulation. Then, the route processor 176 calculates the required time, travel distance to the destination G and the like per respective routes in the travel route information to generate required time information related to the required time and travel distance information related to the travel distance and the like.
If, on the other hand, the setting information contains the traffic congestion prediction request information, the route processor 176 acquires the current position, the destination, the setting item information and the current traffic congestion information. Then, based on the acquired information, the route processor 176 generates candidate travel route information for setting a route with shorter required time, a route with shorter travel distance, or a candidate route without traffic-congestion and traffic regulations. After that, based on the current traffic congestion information and the traffic congestion prediction information, the number of the candidate route contained in the candidate travel route information is reduced based on the acquired information to generate travel route information for setting a route etc. Then, the required time, travel distance to the destination G and the like per respective routes in the travel route information are calculated to generate required time information related to the required time and travel distance information related to the travel distance and the like.
It the step for searching for the travel route, the route processor 176 might use the matching data MM of the map information in addition to the route search map information. This applies to, for instance, the case where the route processor 176 searches for the travel route including a narrow road such as a back street not contained in the route search map information. When the matching data MM is used, the route is appropriately searched according to recognition on the road arrangement. The travel route information includes, for example, the route guidance information for navigating the vehicle to assist the drive thereof. The route guidance information may be appropriately displayed on the terminal display 140 or output as sounds from the terminal sound device 150 to assist the drive.
Further, the route processor 176 calculates predicated arrival position of the vehicle per predetermined time intervals of the travel of the vehicle, e.g. for every 30 minutes, in accordance with the travel route using, for instance, information from the sensor unit 110 and the map information and further considering the traffic congestion prediction information. Specifically, the travel distance during the predetermined time interval is calculated based on the legal speed contained in the map information. Based on the calculated travel distance, the predicted arrival position is recognized using the matching data MM of the map information. The acquired predicated position information relating to the predicted arrival position is appropriately stored in the terminal storage 160.

Further, the route processor 176 searches for a travel route including the predetermined road specified by the user. Specifically, the route processor 176 searches for a travel route from the current position S to the destination G including the passage road on which the user hopes to move based on the specific road information acquired by the condition recognizer 173. During the travel route search, a start-point-side route from the current position S to the inputted passage road and a destination-side route from the destination G to the passage road are searched. The start-point-side route and the destination-side route are searched under the condition considering the shortest distance, the shortest time, combination of the shortest time from the current position S to the destination G and the longest distance of the passage road, and the like. Then, a sectional route of a section of the passage road between: a point at which the start-point-side route and the driving route are connected; and a point at which the destination-side route and the driving route are connected, is searched. Subsequently, the start-point-side route, the sectional route and the destination-side route are connected to retrieve the travel route.
Further, the route processor 176 also searches for a travel route not including, the predetermined circumvention road specified by the user. Specifically, the route processor 176 searches for a travel route from the current position S to the destination G not including the circumvention road on which the user does not hope to move based on the specific circumvention road information acquired by the condition recognizer 173. The circumvention travel route is searched by, for instance: recognizing a road with the same characteristics as specified crossing, intersection or congested road of the specified circumvention road based on the specific circumvention road information recognized by the condition recognizer 173. Then, the travel route not including such road, i.e. the travel route that does not include the circumvention road and a road having the same characteristics as the circumvention road in the plurality of searched travel routes, is specified as the circumvention travel route. Incidentally, in order to circumvent the congested road or the traffic regulation spot, the circumvention road or the section thereof is recognized based on the VICS data or the congestion prediction database to circumvent the circumvention road.
Incidentally, the searching process of the travel route or the circumvention travel route may be followed by a re-searching, when, after the travel route or the circumvention travel route is set based on the setting item information for establishing the travel route, the user sets the passage road or the circumvention road.

The timer 177 recognizes the current time typically based on the reference pulse of an internal clock.
Then, the timer 177 appropriately outputs time information about the recognized current time.

### [Operation of Navigation Device]

Now, the operation of the navigation device 100 will be described with preference to the drawings.

### (Processing for Travel Route Search)

Initially, the processing for travel route search as one of operations of the navigation device 100 will be described with reference to the attached drawings.

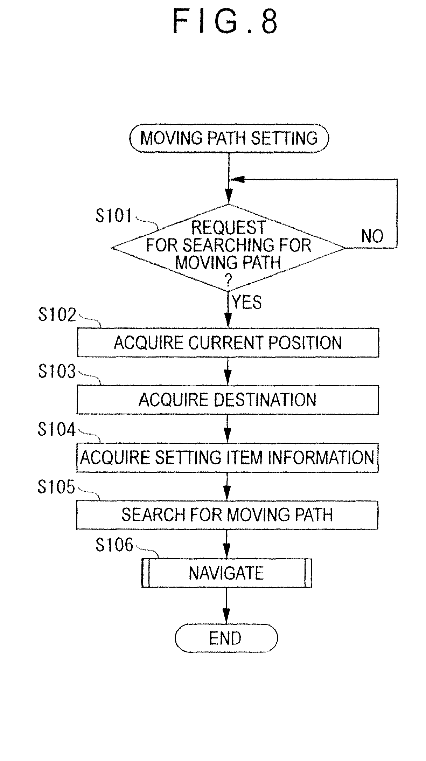

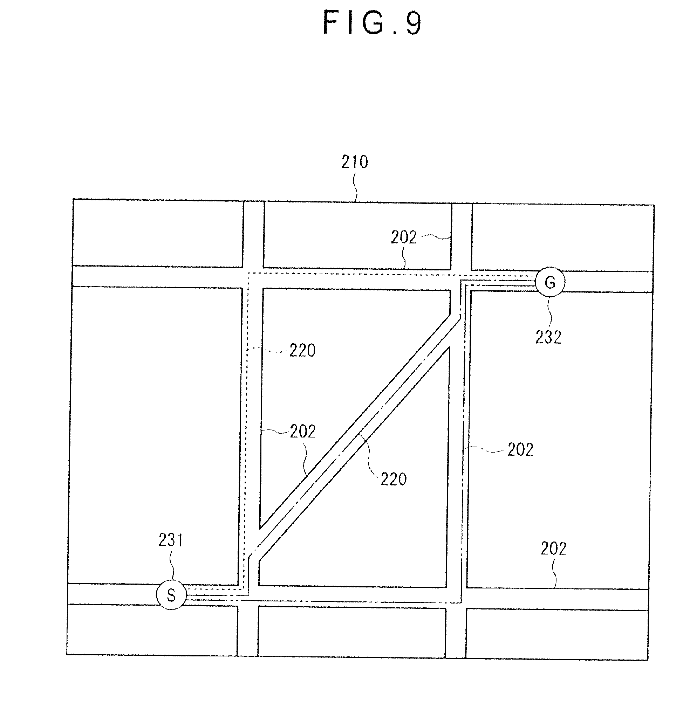

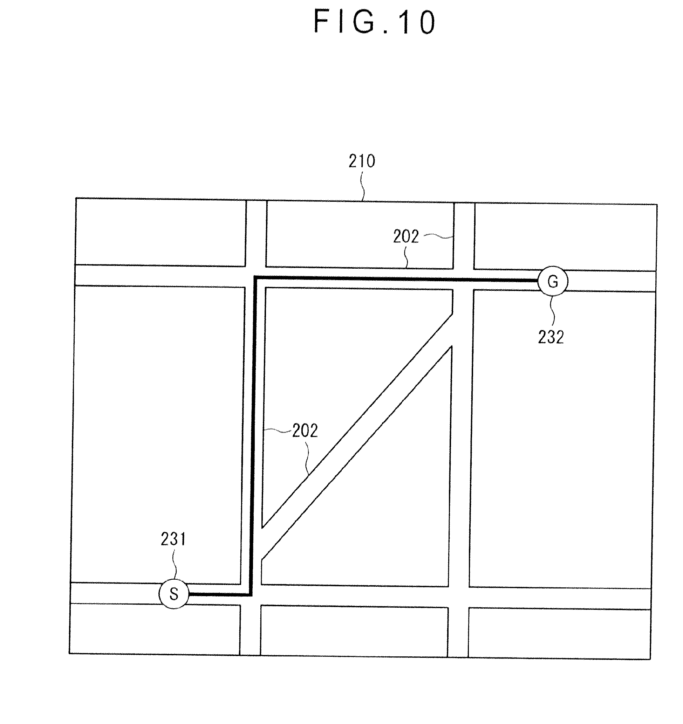

Fig. 8 is a flow chart that shows an operation for establishing a driving-support travel route in the navigation device. Fig. 9 is a schematic illustration showing a map screen when a plurality of candidate travel routes are searched. Fig. 10 is a schematic illustration showing a map screen when an established travel route is displayed on a screen in a superposing manner.

When a user aboard on a vehicle powers on the navigation device 100 to supply electric power thereto, the terminal computing unit 170 conducts booting process and controls the terminal display 140 by the display controller 175 to display a main menu. Specifically, a screen urging the user to specify the operation of the navigation device 100 is displayed on the terminal display 140.
Incidentally, during the booting process, the navigation device 100 may acquire the map information and VICS data through the network by the terminal computing unit 170 as necessary.

As shown in Fig. 8, when the terminal computing unit 170 recognizes the operation signal corresponding to the input operation for requesting the travel route setting on the main menu (step S101), the display controller 175 displays a screen on the terminal display 140 that urges to specify various information necessary for travel route search, e.g. destination, selection of shortest distance and shortest time, necessity for congestion prediction and the like.
When the terminal computing unit 170 recognizes the various information necessary for the travel route search based on the input operation on the terminal console 130, the current position recognizer 171 recognizes the current position S (step S102). Specifically, the current position recognizer 171 calculates the current position of the vehicle on the basis of the speed data and the azimuth data of the vehicle respectively outputted from the speed sensor and the azimuth sensor of the sensor unit 110 and the GPS data about the current positions outputted from the GPS receiver to acquire the current position information. The acquired current position information is appropriately stored in the terminal storage 160.
Then, the terminal computing unit 170 recognizes the destination G specified by the destination recognizer 172 (step S103). Specifically, when the user sets the destination G by operating the terminal console 130 following the instructions on the terminal display 140, the destination recognizer 172 acquires the destination information about the specified destination G. The acquired destination information is appropriately stored in the terminal storage 160. Incidentally, in order to set the destination G, a search information associated with the point of the destination G based on the map information may be acquired in accordance with search request of the point search information by the user, and the information related to the point of the search information may be acquired as the destination information.
The processor 170 controls the terminal display 140 by the display controller 175 to display an indication for urging the user to input the settings, e.g. the shortest time and the shortest distance for the travel route search. When the user inputs the settings by operating the terminal console 130 following the instruction on the displayed screen, the terminal computing unit 170 acquires the setting item information about the settings that have been input, the VICS data acquired by the terminal communicator 120 and the like (step S104). The acquired setting item information and VICS data are also outputted to the terminal storage 160 to be stored therein.

Subsequently, the terminal computing unit 170 searches for a travel route from the current position S of the vehicle to the destination G with the route processor 176 using the map information stored in the terminal storage 160 (route searching process) based on the current position information, the destination information, the setting item information and the VICS data stored in the terminal storage (step S105).
Then, the route processor 176 retrieves a plurality of candidate travel routes 220 from the current position S to the destination G as shown in Fig. 9 and generates required time information and travel distance information by calculating the required time and travel distance from the current position S to the destination G in each of the candidate travel routes 220. The route processor 176 then establishes a travel route information relating to one of the candidate travel route 220 that is the most fitted to the setting item information and displays the travel route in a manner superposing with the map information on the terminal display 140 as shown in Fig. 10, together with the predetermined time and travel distance in the travel route information as necessary.
During the travel route setting, the route processor 176 provides, for instance, guidance for confirming whether the established travel route is agreeable or not on a display or with sound. When the route processor 176 recognizes an operation signal indicating that the user affirmed the search results according to the user's input operation on the terminal console 130, the travel route is determined. Incidentally, when the user does not agree with the displayed travel route, the travel route search is terminated or the travel route is re-searched after returning to the step S101, for instance. The specified travel route information is appropriately stored in the terminal storage 160.
Incidentally, a selecting process may be conducted, where a predetermined number (e.g. three) of the plurality of candidate travel routes 220 may be displayed on the terminal display 140 to urge the selection of the user. When the user selects one of the travel route information, the travel route is specified to set the travel route information.

After establishing the travel route, the display controller 175 of the terminal computing unit 170 reads out the map information of a predetermined scale from the terminal storage 160 and displays the established travel route and the icon 231 of the current position S on the map information on the terminal display 140.
Incidentally, when a predetermined traffic information and feature information are to be superimposed according to the setting, such information is superimposed on the map information on the display.

Then, the terminal computing unit 170 conducts guidance processing for supporting the travel of the vehicle based on the current position S of the vehicle (step S106). Specifically, the terminal computing unit 170 sequentially recognizes the current position information from the sensor unit 110, which is compared with the travel route information established in the step S105. The result of the comparison is displayed on the terminal display 140 or is outputted as a sound by the terminal sound device 150 under the control of the guidance notifier 174 based on the guidance information in the travel route information or the guidance information generated by the guidance notifier 174 to support the traveling. Further, the terminal computing unit 170 determines whether the current position reaches the destination G for each time the travel condition changes in accordance with the travel of the vehicle. When it is determined that the vehicle has not arrived at the destination G, the guidance processing is continued. On the other hand, when it is determined that the vehicle has arrived at the destination G, the guidance processing is terminated to end the travel support.

### (Re-search Processing for Travel Route Giving Priority to Passage road)

Next, re-search processing of the travel route when the user requests re-searching during the searching of the travel route will be described below with reference to the attached drawings.

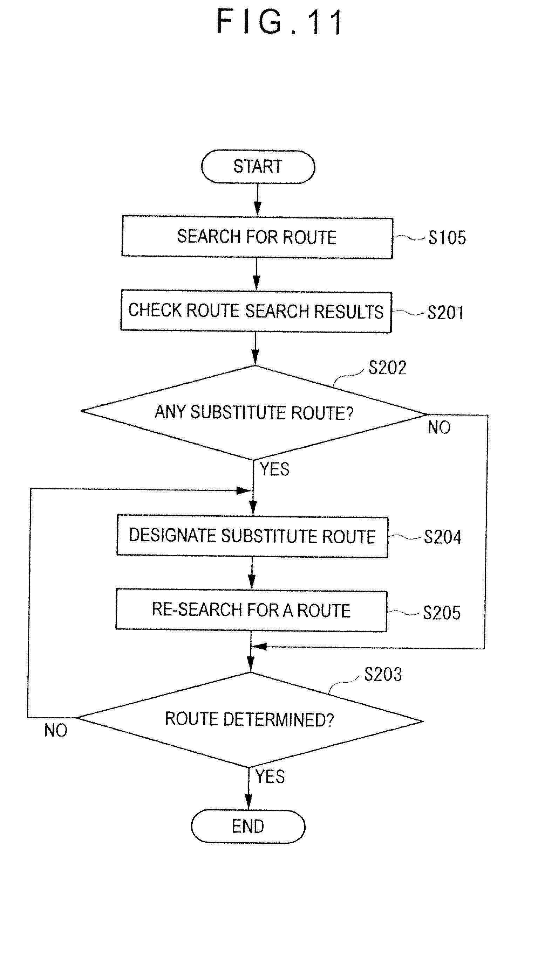

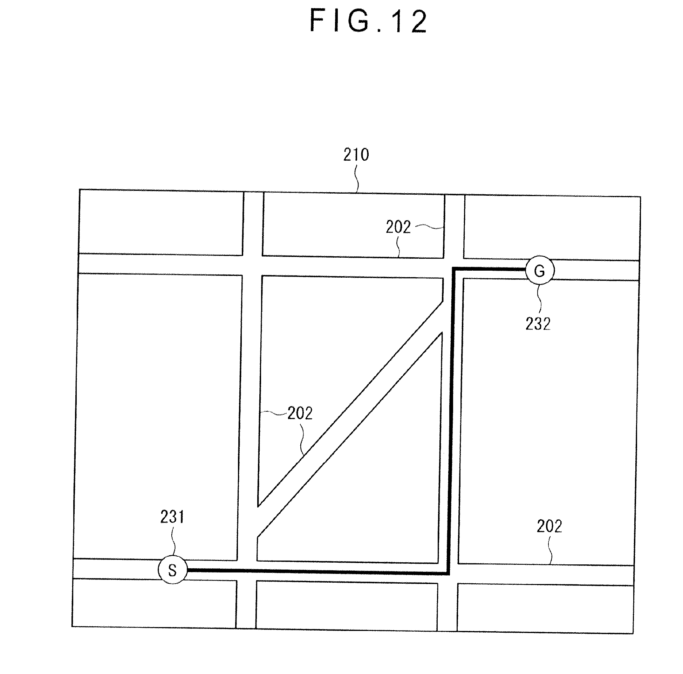

Fig. 11 is a flow chart that shows a re-search operation for designating a passage road in the navigation device. Fig. 12 is a schematic illustration showing a map screen when a travel route established by re-searching is displayed on a screen in a superposing manner.

During the procedure for the user to confirm the searched travel route as shown in Fig. 10 in the travel route searching process, when the user designates a passage road, the terminal computing unit 170 conducts re-searching of a travel route including the specified passage road. Specifically, as shown in Fig. 11, after the travel route searching of step S105 during the above-described travel route setting process, the terminal computing unit 170 notifies the searched travel route to a user by displaying the travel route superposed on the map information on the terminal display 140 as shown in Fig. 10 or displaying the required time and travel distance in the travel route information. Further, the terminal computing unit 170 displays a screen that urges input operations for confirming whether the searched travel route is agreeable to the user or not on the terminal display 140 (step S201).
Then, the terminal computing unit 170 recognizes through the condition recognizer 173 the presence of the user's input operation on the terminal console 130 for a substitute route, i.e. the passage road, in accordance with the prompt on the screen that urges an input operation for confirming the travel route (step S202).
During the step S202, if no input operation of the passage road is recognized, i.e. an operation signal from the terminal console 130 indicating that no input operation for the passage road is required is recognized, the terminal computing unit 170 checks the presence of input operation by the user to confirm whether the user agrees to the already searched travel route in accordance with the input operation on the terminal console 130 (step S203). In the step S203, when an operation signal indicating that the searched travel route is agreed is received from the terminal console 130, the terminal computing unit 170 establishes the travel route to proceed to the guidance processing as described in the travel route setting process. Incidentally, without providing the input operation indicating that no input operation for the passage road is required, the condition recognizer 173 may judge that the specific road information is not acquired to proceed to the step S203.

On the other hand, if input operation of the passage road is recognized, i.e. an operation signal indicating that input operation for the passage road is required from the terminal console 130 is recognized in the step S202, the terminal computing unit 170 proceed to designation of the passage road as a substitute route.
For instance, the cursor 201 for designating the passage road is displayed in the map screen 210 as shown in Fig. 6, where the passage road is specified by the terminal console 130 to urge for an input operation on the passage road. When the passage road is specified by the operation signal for identifying the passage road after the passage road is designated (step S204), the condition recognizer 173 acquires a link L as a segment information related to the designated passage road on the basis of the link string block information of the map information to form the specific road information. The link L represents the information of the link L at the designated position.
The route processor 176 recognizes the attribute information L4 as the road characteristics of the link L and retrieves other links L continuous with the link L and having the same attribute information L4. In other words, the other links L constituting the same road (e.g. national road, prefectural road, expressway and the like) as the link L at the designated position. The links L are appropriately stored in the terminal storage 160. The terminal computing unit 170 displays the road based on the link L at the designated position and the links L constituting the same retrieved road in a display format (e.g. flickering) different from the display format before being selected and also different from that of the other road as shown in Fig. 6 to urge determination of the road. Then, by a user's input operation on the terminal console 130 for setting the selected road as the passage road, the road is displayed in a display format (e.g. in a different color) different from the display format before being selected and also different from that of the other road to show that the passage road has been determined and specified.

After the setting operation of the passage road in the step S204, the terminal computing unit 170 re-searches for a travel route including the passage road (step S205).
For instance, a start-point-side route from the current position S to the inputted passage road and a destination-side route from the destination G to the passage road are searched. The start-point-side route and the destination-side route are searched under conditions considering the shortest distance, the shortest time, combination of the shortest time from the current position S to the destination G and the longest distance of the passage road, and the like.
Specifically, a series of link L string including the link L in the specific road information and the link L constituting the same retrieved road is recognized, and a plurality of candidate start-point-side routes are retrieved from the link L including the current position S to the link L string constituting the designated passage road. The required time, travel distance and the like are calculated from the current position S in the respective candidate start-point-side routes to the passage road to generate the required time information, the travel distance information and the like. Similarly, a plurality of candidate destination-side routes including the link L including the destination G that are connected to the link L string constituting the designated passage road are retrieved. Then, the required time, travel distance and the like are calculated from the destination G in the respective candidate destination-side routes to the passage road to generate the required time information, the travel distance information and the like.
Further, the route processor 176 recognizes the link L string between: the connection between the respective candidate start-point-side routes and the designated driving route: and the connection between the candidate destination-side routes and the designated driving route as candidate sectional routes and calculates the required time and travel distance of the candidate sectional routes to generate the required time information and travel distance information. Subsequently, the respective candidate start-point routes, the respective candidate sectional routes and the respective candidate destination-side routes are connected to form candidate travel routes. Then, the required time and travel distance of the respective candidate travel routes are calculated to select one of the candidate travel routes 220 that is the most suitable for the preset search conditions.
Then, the process advances to step S203 to determine the travel route. Specifically, in the same manner as the above-described travel route setting, the display controller 175 displays the re-searched travel route on the terminal display 140 being superposed on the map information as shown in Fig. 12 or in combination with the required time or travel distance of the travel route information to notify the user to urge confirmation. When the route processor 176 recognizes an operation signal indicating that the user affirmed the search results according to the user's input operation on the terminal console 130, the travel route is determined to proceed to the guidance processing.
Incidentally, when no determination of the travel route is conducted by the user or a request for re-searching is recognized in the step S203, re-searching is repeated returning back to the step S204.

### (Re-search Processing for Travel Route Giving Priority to Detour Road)

Next, re-search processing of the circumvention travel route when the user requests re-searching during the searching of the travel route will be described below with reference to the attached drawings.
Incidentally, for the convenience of explanation, a process for rerouting of the travel route determined during the travel route setting process, i.e. re-searching of a new travel route will be mentioned below.

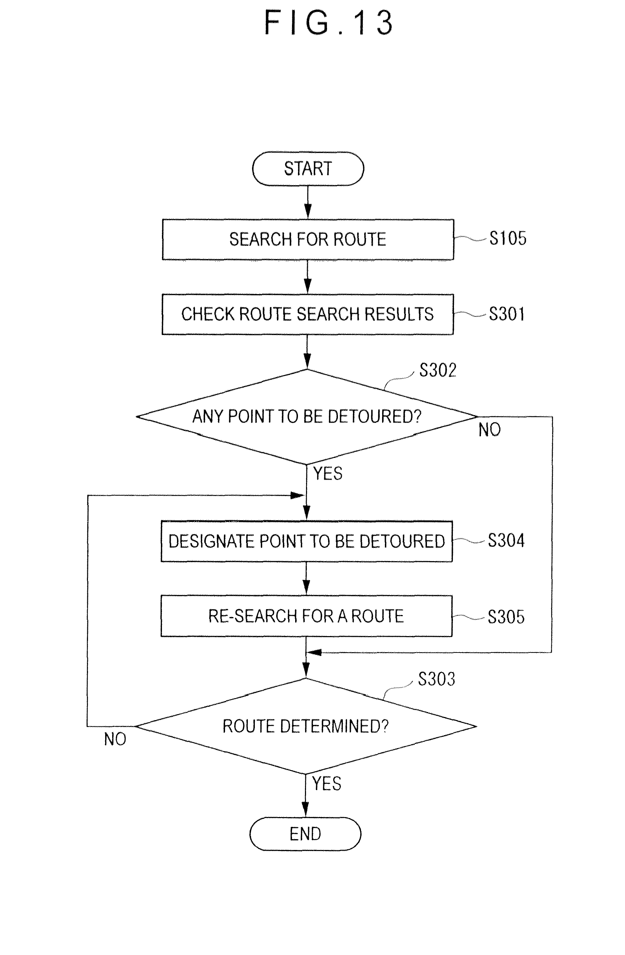

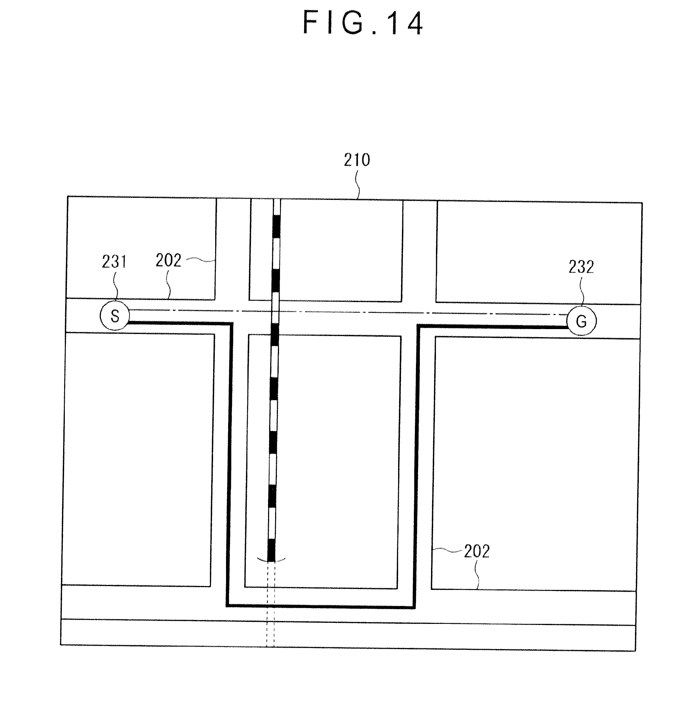

Fig. 13 is a flow chart that shows a re-search operation for designating a circumvention road in the navigation device. Fig. 14 is a schematic illustration showing a map screen when a circumvention travel route established by re-searching is displayed on a screen in a superposing manner.

During the procedure for the user to confirm the searched travel route as shown in Fig. 7 in the travel route searching process, when the user designates a circumvention road, the terminal computing unit 170 conducts re-searching of a travel route not including the specified circumvention road. Specifically, as shown in Fig. 13, after the travel route searching of step S105 during the above-described travel route setting process, the terminal computing unit 170 notifies the searched travel route to a user by displaying the travel route superposed on the map information on the terminal display 140 as shown in Fig. 7 or displaying the required time and travel distance in the travel route information. Further, the terminal computing unit 170 displays a screen that urges input operations for confirming the searched travel route is agreeable to the user or not on the terminal display 140 (step S301).
Then, the terminal computing unit 170 recognizes through the condition recognizer 173 the presence of the user's input operation on the terminal console 130 for a substitute route, i.e. the circumvention road that is not hoped to move on, in accordance with the prompt on the screen to urge input operation for confirming the travel route (step S302).
During the step S302, if no input operation of the circumvention road is recognized, i.e. an operation signal from the terminal console 130 indicating that no input operation for the circumvention road is required is recognized, the terminal computing unit 170 checks the presence of input operation by the user to confirm whether the user agrees to the already searched travel route by the input operation on the terminal console 130 (step S303). In the step S303, when an operation signal indicating that the searched travel route is agreed is received from the terminal console 130, the terminal computing unit 170 determine the travel route to proceed to the guidance operation as described in the travel route setting process. Incidentally, without providing the input operation indicating that no input operation for the circumvention road is required, the condition recognizer 173 may judge that the specific circumvention road information is not acquired to proceed to the step S303.

On the other hand, if input operation of the circumvention road is recognized, i.e. an operation signal indicating that input operation for the circumvention road is required from the terminal console 130 is recognized in the step S302, the terminal computing unit 170 proceeds to designation of the circumvention road.
For instance, the cursor 201 for designating the circumvention road is displayed in the map screen 210 as shown in Fig. 7, where the circumvention road is specified by the terminal console 130 to urge for input operation of the circumvention road. When the circumvention road is specified by the operation signal for identifying the circumvention road after the circumvention road is designated (step S304), the condition recognizer 173 acquires the link L as a segment information related to the designated circumvention road and the node N as the point information at the designated position on the basis of the link string block information of the map information to form the specific circumvention road information. The link L and the node N represent the information of the link L and the node N at the designated position.
The route processor 176 recognizes the attribute information L4 as the road characteristics of the link L, and the intersection flag information N2 and the traffic light flag information N3 as the point characteristics of the node N. Further, the route processor 176 retrieves the links L and the nodes N associated with the same attribute information L4, the intersection flag information N2 and the traffic light flag information N3 having the same characteristics as the link L and the node N. The links L and the nodes N are appropriately stored in the terminal storage 160.

After the setting operation of the circumvention road in the step S304, the terminal computing unit 170 re-searches for a circumvention travel route not including the circumvention road (step S305).
For instance, in the same manner as the route searching in the above-described travel route setting process, the route processor 176 retrieves a plurality of candidate travel routes 220 from the current position S to the destination G. Then, the links L and the nodes N in the respective candidate travel routes 220 are recognized to determine the presence of the links L and the nodes N having the same characteristics as the link L and the node N in the specific circumvention road information retrieved in the step S304, e.g. a crossing, an intersection of a specific nature (e.g. absence of right turn or right-turn signal and the like), congestion or predicted congestion and the like. Then, the route processor 176 selects one of the candidate travel routes 220 that does not include a road of the same characteristics as the specific circumvention road information and the most suitably meets the preset search condition such as conditions of the shortest time and distance from the current position S and the destination G and the like.
Then, the process advances to step S303 to determine the circumvention travel route. Specifically, in the same manner as the above-described travel route setting, the display controller 175 displays the re-searched circumvention travel route on the terminal display 140 being superposed on the map information as shown in Fig. 14 or in combination with the required time or travel distance of the circumvention travel route information to notify a guidance to the user to urge confirmation. When the route processor 176 recognizes an operation signal indicating that the user affirmed the search results according to the user's input operation on the terminal console 130, the circumvention travel route is determined to proceed to the guidance processing.
Incidentally, when no determination of the circumvention travel route is conducted by the user or a request for re-searching is recognized in the step S303, re-searching is repeated returning back to the step S304.

### [Effect and Advantage of Navigation Device]

As described above, in the above-described embodiment, the map information including: a plurality of the nodes N having the unit node ID N1 and representing a predetermined point; the link L having the unique link information L1 and connecting a pair of the nodes N; the attribute information L4 indicating the characteristics of the road represented by the nodes N and the link L; and the link string block information having the intersection flag information N2 and the traffic light flag information N3, the current position information relating to the current position S as the start point of a vehicle and the destination information relating to the destination G to which the vehicle is traveled are acquired. When the condition recognizer 173 acquires the specific road information relating to the passage road indicating the predetermined road specified by input operation o the terminal console 130 and the like, the route processor 176 searches for the start-point-side route from the current position S to the passage road and the destination-side route from the destination G to the passage road to retrieve the travel route from the current position S to the destination G including the specified passage road.
Accordingly, the travel route giving priority to a road on which the user hopes to move such as a road frequently used by the user, a road for the user to be easily turned and a road wide enough for the user to easily run on can be retrieved, so that a travel route that meets the preference of each of the users can be easily retrieved only by setting the road on which the user hopes to travel.

Further, the route processor 176 searches for the sectional route of the passage road between the connection of the start-point-side route and the passage road and the connection between the destination-side route and the passage road, where the start-point-side travel route, the sectional route and the destination-side route are connected to search for the travel route including the driving route.
Accordingly, a travel route giving priority to the road that the user hopes to pass on can be easily calculated. For instance, in order to run on the favorable road efficiently and relatively for a long time, the start-point-side route and the destination-side route may be used for the shortest distance and the shortest time. Alternatively, the route from the current position S to the destination G may take the shortest time and the passage road continues for the longest distance. Thus, the travel route search under the condition that meets the preference of the respective users can be easily conducted.

Further, the route processor 176 can retrieve a travel route that allows efficient and relatively long-time use of the road on which the user hopes to travel under the condition that the start-point-side route and the destination-side route are searched on the basis of the shortest distance.
In other words, when a user hopes to travel on roads of which ends are remotely located, e.g. belt line and Kosyu street, unusable travel route may be retrieved if a travel route is retrieved by merely connecting the current position S and the destination G to the both ends of the favorable roads. Further, if a road having limited connection such as an interchange of an expressway is set as the favorable road, the road favorable for the user may not be sufficiently used when the user enters the expressway from an interchange located in the direction of the destination G in spite of extremely short distance to the interchange of the expressway located opposite to the destination G or the travel route is established from an interchange located before the destination G in spite of extremely short distance to the destination G of another interchange past the destination G.
Such inconvenience can be prevented by setting the shortest-distance condition for retrieving the start-point-side route and the destination-side route and the road favorable for the user's passage that meets the user's demand can be utilized relatively for a long time, thus allowing searching of the travel route that is more suitable for the user's preference.

Further, the route processor 176 can retrieve a travel route that allows efficient and relatively long-time use of the road on which the user hopes to travel under the condition that the start-point-side route and the destination-side route are searched on the basis of the shortest time.
Specifically, when the start-point-side route and the destination-side route take the shortest time, the ratio of the time moving on the passage road within the entire travel route can be increased, so that a travel route that further reflects the user's preference can be obtained.

When the route processor 176 searches for a travel route with the shortest time from the current position S to the destination G including the passage road and the longest distance of the passage road, a travel route that can utilize a favorable road with efficiency and for relatively long time can be retrieved.
In other words, since the time required for moving from the current position S to the destination G is short and the length of the road favorable for the passage of the user can be lengthened, thus retrieving a travel route reflecting the user's preference and allowing efficiently reaching to the destination G.

Further, the route processor 176 retrieves the start-point-side route and the destination-side route having the same characteristics as the designated passage road (e.g. a national road when the designated road is a national road) based on the attribute information L4 of the specific road information acquired by the condition recognizer 173, so that the user can move on a road similar to the favorable road from the current position S to the destination G.
Accordingly, a travel route that reflects more user's preference can be retrieved.

The route processor 176 retrieves the travel route from the current position S to the destination G based on the map information, the current position information and the destination information and, when the condition recognizer 173 acquires the specific road information according to the searched travel route, e.g. the passage road is designated based on the rerouting request, another travel route including the designated passage road is re-searched.
Accordingly, since the route is re-searched after the user confirms the once retrieved travel route, the user can be guided on a re-searched travel route that passes on further favorable road for passage and is more suitable for the user's preference than the searched travel route. Further, the current position S, the destination G and the roads on which the current position S and the destination G are located (i.e. the links L) have already been recognized in setting the travel route. Accordingly, calculation load for re-searching can be reduced, thus easily and rapidly retrieving the travel path that includes the road favorable for the user and thus is more suitable for the user's preference.
Further, the link L of the link string block information of the passage road designated based on the map information is acquired as the specific road information. Then, the other link L and node N having the same attribute information L4 associated with the attribute information L4 of the specific road information are recognized, where the travel route is re-searched based on the other link L and the node N.
Accordingly, the travel route that includes a road not favorable for the user can be retrieved with the use of the link L and the node N of the map information, a travel route that meets the user's preference can be easily retrieved without employing special data structure.

In order to specify the passage road that is favorable for the passage of the user, the condition recognizer 173 recognizes the operation signal indicating the selection of one of the roads 202 on the map information outputted by the terminal console 130 that outputs the operation signal in accordance with an input operation and displayed on the terminal display 140. The road information of the selected road 202 is acquired based on the map information to acquire the specific road information to specify the passage road.
Accordingly, as shown in, for instance, Figs. 6 and 7, the passage road can be easily specified based on the map information considered favorable for the user's passage by, for instance, selection using the cursor 201 or input operation with a touch panel of the terminal display 140, thus further improving the convenience for the user.
Further, when the passage road is designated by the user, the display controller 175 displays the designated passage road superposed on the map information in a display format different from that of the other road as shown in, for instance, Fig. 6.
Accordingly, the road on which the user hopes to travel can be easily recognized, thereby further improving the convenience for the user.

When the user acquires the specific circumvention road information on the circumvention road that the user hopes to circumvent by the condition recognizer 173 based on the map information, the route processor 176 also retrieves the circumvention travel route that does not include the road having characteristics similar to that of the specific circumvention road information, e.g. a crossing, an intersection and traffic congestion.
Accordingly, since the unfavorable road can be searched together with the favorable road, the travel route search that further meets the user's preference can be conducted.
When the circumvention travel route is searched, in the same manner as the searching of the travel route including the passage road, the road having, the same characteristics as the designated circumvention road can be excluded based on the attribute information L4 of the link string block information of the map information in retrieving the circumvention travel route.
Accordingly, a circumvention travel route that reflects more user's preference can be easily retrieved.
Further, simultaneously with retrieving the travel route from the current position S to the destination G, the circumvention travel route that does not include the circumvention road is re-searched when the specific circumvention road information is acquired by the condition recognizer 173.
Accordingly, since the guidance is conducted on the travel route excluding the unfavorable road for the user's passage based on the search results of the once searched travel route, thereby further improving the user's convenience. Further, the current position S, the destination G and the roads on which the current position S and the destination G are located (i.e. the links L) have already been recognized in setting the travel route. Accordingly, calculation load for re-searching can be reduced, thus easily and rapidly retrieving the travel path that includes the road unfavorable for the user and thus is more suitable for the user's preference.
Especially, since the circumvention road is designated as a road for evading a crossing, intersection, traffic congestion and the like in accordance with the driving ability and preference of the user during the driving, the circumvention travel route can be searched further in correspondence to the user's preference.

The route processor 176 searches the road under the condition of the shortest time or the shortest distance in searching for the circumvention travel route, so that the circumvention travel route that allows efficient travel to the destination G can be retrieved while excluding the unfavorable road for the user's passage.
Since the route processor 176 searches for the circumvention travel route giving priority to the road having characteristics similar to the road including the current position S or the destination G, the road condition is not greatly varied from the current position S and to the destination G, thereby allowing travel of the user to the destination G in a comfortable condition with the guidance based on the circumvention travel route, thus further improving the convenience for the user.

The condition recognizer 173, the route processor 176, the display controller 175 and the like are implemented as programs on a CPU, in order to execute the above-mentioned processing.
Accordingly, the processing can be easily implemented by installing the program or using the recording medium storing the program, thereby easily achieving expansion of the usage.

### [Modification of Embodiment]

The present invention is not limited to the above specific embodiments, but includes modifications and improvements as long as the objects of the present invention can be attained.

Incidentally, as described above, the vehicle of the invention is not limited to an automobile, but includes any vehicle that runs on a road such as a two-wheel vehicle including motorcycle.
Further, not limited to an in-vehicle device, the present invention may be implemented in various form of devices including an arrangement directly carried by a user such as a cellular phone and a PHS.
Further, not limited to a standalone arrangement of the navigation device 100, the present invention may be implemented in a system where the map information and the like is obtained from a server unit via a network, the travel route of the vehicle is searched by a server unit before the searched result is transmitted to a terminal unit on the vehicle via a network to be finally determined at the terminal unit.
Further, not limited to in-vehicle device, the present invention may be applied to a so-called simulation software in which an imaginary start point and a destination are set on a personal computer and the like to search for a travel route and a circumvention travel route on the personal computer.

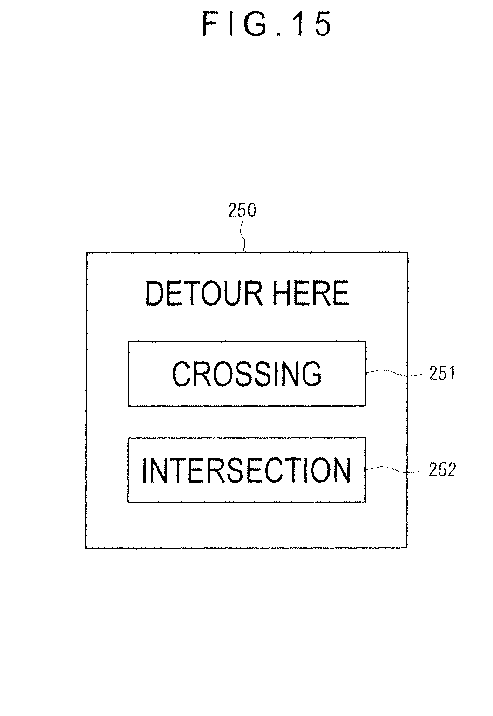

The passage road may be designated not only by the above-described selection using the cursor 201 on the map displayed on a screen, but may be designated in any manner including road search (e.g. "Kosyu street" and "Belt Line No. 7") and direct text-inputting.
Similarly, designation of the circumvention road is not limited to the text-inputting or an operation of the cursor 201. For instance, as shown in Fig. 15, a command button 251 may be provided for each of the types of the characteristics of the road to be circumvented. A display screen 250 that allows selection of the command button 251 before searching for the circumvention travel route to specify the circumvention road may be provided, on which the road to be circumvented is specified to search for the circumvention travel route. Alternatively, a popup area 240 including the command button 251 may be displayed as shown in Fig. 7 in searching for the circumvention travel route.

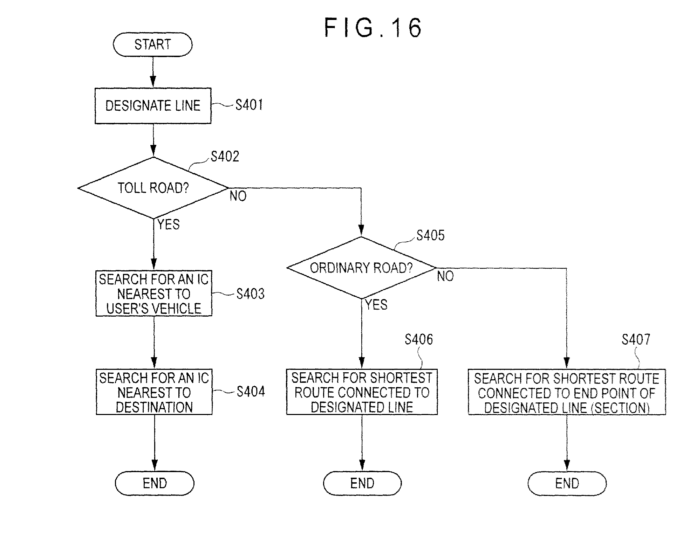

Further, the travel route search including the passage road is not limited to the above-described method but may be conducted in any arithmetic processing as long as the designated road can be efficiently used. For instance, as shown in Fig. 16, when the passage road is designated (step S401), whether the passage road is a toll road nor not is determined based on the specific road information acquired in the step S401 (step S402). When it is determined that the passage road is a toll road, the start-point-side route is retrieved by searching for an interchange that is the nearest to the current position S (step S403) and the destination-side route is retrieved by searching for an interchange that is the nearest to the destination G to retrieve the travel route efficiency including the expressway, i.e. the designated passage road (step S404).
When it is determined that the passage road is not an expressway, whether the passage road is an ordinary road or not is judged (step S405). When it is judged that the passage road is an ordinary road, the shortest route of which length from the current position S or the destination G before being connected to the line (the other link L line having the same characteristics to form the road line such as Kosyu Road and Belt lie No. 7) recognized based on the attribute information L4 of the designated road becomes the shortest is retrieved and the start-point-side route and the destination-side route are respectively searched to retrieve the travel route (step S406).
Further, when it is determined that the road is not an ordinary road by is a narrow so-called back street in the step S405, the shortest route from the current position S or the destination G before being connected to the end points of the designated road is searched to retrieve respectively the start-point-side route and the destination-side route before acquiring the travel route (step S407).
The above arrangement for the travel search also attains similar effects and advantages. Specifically, an efficient travel route that is more suitable for the user's preference can be retrieved.

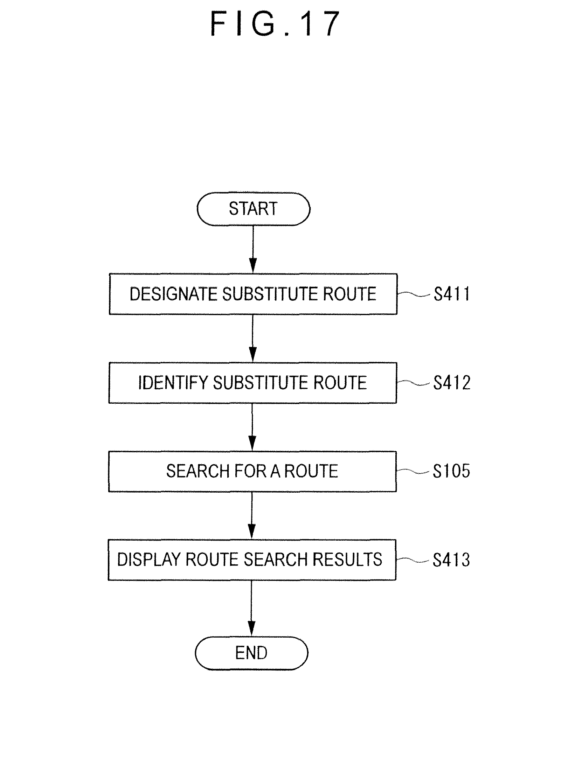

It is mentioned that the travel route including the passage road is re-searched after the travel route is once retrieved. However, not limited to the re-searching, the passage road may be designated to retrieve the travel route including the passage road when the travel route is initially searched.
In such an arrangement, as shown, for instance, in Fig. 17, when the travel route is searched in the above-described step S105, in addition to specifying the setting items such as the searching condition, the driving route is designated by the user in various setting operation (step S411). The specific road information of the designated road is acquired based on the map information (step S412) and the travel route is retrieved based on the other setting items as well as the specific road information (step S105). The retrieved travel route is notified by the user on a display or the like to be established (step S413) and the guidance processing is conducted according to the established travel route. When the passage road is not determined in the step S413, re-searching may be conducted.
Since the travel route including the road on which the user hopes to travel can be searched at the initial travel route search, it is not necessary to conduct re-searching after the travel route is searched, thereby improving the convenience.

Though one passage road is designated and the start-point-side route and the destination-side route connected to the passage road are searched in the embodiment, a plurality of the road on which the user hopes to travel may be designated and the travel route that passes through the plurality of designated roads may be set.
In such an arrangement, first one of the plurality of the passage roads that is the nearest to the start point is retrieved and the start-point-side route is retrieved on the basis of the shortest distance and/or time and the like to the first passage road. Further, a second passage road that is the nearest to the first passage road nearest to the start point is retrieved. Then, an intermediate route is retrieved on the basis of the shortest distance and/or time from respective branch positions of the first passage road to the respective branch positions of the second passage road that is the nearest to the first passage road. Thus, while sequentially retrieving the driving route to retrieve the intermediate route, the destination-side route between the last driving route and the destination is exemplarily searched to retrieve the travel route.

The circumvention road is not limited to the above-described crossing, intersection, traffic congestion and the like, but includes various road condition and traffic condition such as traffic regulation, a road without street lamp and the like.
Though the circumvention travel route is capable of searching in the embodiment, the circumvention travel route may not be searched.

Though the current position information recognized by the current position recognizer 171 is acquired based on the output data from the various sensors 112 or the GPS data outputted by the GPS receiver in the embodiment, the current position of the vehicle may be recognized in any manner. Specifically a simulated current position inputted by the terminal console 130 may be recognized as the current position, or the current position may be recognized based on radio field intensity when a server unit recognizes the vehicle position within a system arrangement, for instance.

While the functions are realized in the form of programs in the above description, the functions may be realized in any form including hardware such as a circuit board or elements such as IC (Integrated Circuit). In view of easy handling and promotion of the use, the functions are preferably stored and read from programs or recording media.
The computing section may not necessarily be a single computer but may be a plurality of computers connected over a network, elements such as a CPU and a microcomputer, or a circuit board on which a plurality of electronic parts are mounted.

The arrangements and the operating procedures for the present invention may be appropriately modified as long as the scope of the present invention can be attained.

### [Advantages of Embodiment]

As described above, the map information including the link string block information with the attribute information L4 related to the characteristics of the road represented by the node N and the link L, the intersection flag information N2 and the traffic light flag information N3, the current position information related to the current position S (start point of the vehicle) and the destination position information related to the destination G (destination of the vehicle) are respectively acquired in the embodiment. When the condition recognize 173 acquires the specific road information relating to the passage road indicating the predetermined road specified by input operation o the terminal console 130, the route processor 176 searches for the start-point-side route from the current position S to the road and the destination-side route from the destination G to the passage road to retrieve the travel routes from the current position S to the destination G including the specified passage road.
Accordingly, the travel route giving priority to a road on which the user hopes to move such as a road frequently used by the user, a road for the user to be easily turned and a road with wide width and thus easy for the user to run on can be retrieved, so that a travel route that meets the preference of each of the users can be easily retrieved only by setting the road on which the user hopes to travel.

### Industrial Applicability

The present invention can be used for a travel route search device that navigates a travel of a vehicle from a start point to a destination based on map information, method thereof, program thereof, recording media storing the program and a navigation device.

## Claims

1. A route information displaying device that displays a route information toward destination based on a set route, the device comprising:
a display controller that displays information indicating the set route on a display; and
an operating unit that, from a plurality of points included in the information indicating the set route, inputs a point specified by a user; wherein
the display controller displays a new route information to the destination that does not include the point specified by the operating unit on the display.

2. A route information displaying method for displaying a route information toward a destination based on a set route, the method comprising:
a display controlling step for displaying information indicating the set route on a display;
an inputting step that, from a plurality of points included in the information indicating of the set route, inputs a point specified by a user; and
a display controlling step for displaying a new route information to the destination that does not include the point specified by the operating unit on the display.

3. A guiding device, comprising:
a route information displaying device according to claim 1;
a detector that detects a travel condition of the user; and
a notifying unit that notifies the travel condition based on the set route and the travel condition.
